# EUROPEAN PATENT APPLICATION

(11) **EP 4 837 431 A1**
(43) Date of publication of application: **11.11.2026**
(21) Application number: 26168160.5
(22) Date of filing: 26.03.2026
(51) Int. Cl.: A23N 12/08, A23F 5/04, A23N 12/12

(54) **METHOD FOR INDUSTRIAL ROASTING OF FOOD PRODUCTS**

(30) Priority: 09.05.2025 IT 202500010521
(71) Applicant: Soremartec S.A., 2633 Senningerberg (LU)
(72) Inventor: RATTO, Gabriele, L-2633 Senningerberg (LU)
(74) Representative: Buzzi, Notaro & Antonielli d'Oulx S.p.A.

(57) **Abstract**

A method for the industrial roasting of a food product, in particular nuts, comprising the steps of:
- providing a roasting chamber (20) extending from a first to a second end (20A, 20B) along a feeding direction (K);
- feeding a flow (F) of product to be roasted through said roasting chamber (20), along said feeding direction (K), from the first to the second end (20A, 20B) of said roasting chamber, in the form of a flow of granular product bodies having a cross-section corresponding to a flow section of said roasting chamber (20);
- while said product flow (F) is fed along said roasting chamber, subjecting said product flow to a roasting thermal treatment.

The method is characterized by being able to continuously monitor the reduction of the microbial load in the treated product.

## Description

The present invention relates to a method for the industrial roasting of food products, in particular nuts (for example, walnuts, hazelnuts, peanuts, almonds), cocoa beans, cereals, coffee, etc.

One of the requirements that an industrial roasting method must meet concerns the reduction of the microbial load present in the food, that is, the reduction, up to a predetermined threshold, of the number of pathogenic and spoilage microorganisms present in the food product.

This requirement is fundamental to ensure food safety and to comply with current hygienic and health regulations.

In order to ensure compliance with this requirement, the roasting methods used in the art operate under "controlled" operating conditions, that is, according to operational parameters that can vary only within predetermined ranges of values.

In this context, the present invention provides an industrial roasting method capable of aiding in the control and prediction of the reduction of the microbial load.

In general, the present invention relates to a roasting method according to claim 1.

The present invention also relates to a roasting plant according to claim 11.

The attached claims form an integral part of the teaching described herein.

Further features and advantages of the present invention will become apparent from the following description with reference to the attached drawings, provided purely by way of non-limiting example, wherein:
- figure 1 schematically represents an example of a method and plant for the industrial roasting of food products;
- figure 2 schematically represents the plant of figure 1;
- figure 3 schematically represents an example of a control logic implemented by the method and plant described herein;
- figure 4 schematically represents a product flow passing through a roasting chamber in an example of implementation of the method described herein;
- figure 5 schematically represents an elementary block of a product flow passing through a roasting chamber in an example of implementation of the method described herein.

In the following description, various specific details are illustrated to provide a thorough understanding of the embodiments. The embodiments can be carried out without one or more of the specific details, or with other methods, components, materials, etc. In other cases, known material structures or operations are not shown or described in detail to avoid obscuring various aspects of the embodiment.

The references used herein are for convenience only and therefore do not define the scope of protection or the extent of the embodiments.

As mentioned above, the method described herein operates the industrial roasting of food products.

The method described herein has been, in particular, devised for the industrial roasting of nuts (for example, hazelnuts, walnuts, peanuts, almonds), cocoa beans, coffee, cereals, etc.

For simplicity of discussion, the following will refer to the roasting of hazelnuts as an example of application to describe the method described herein.

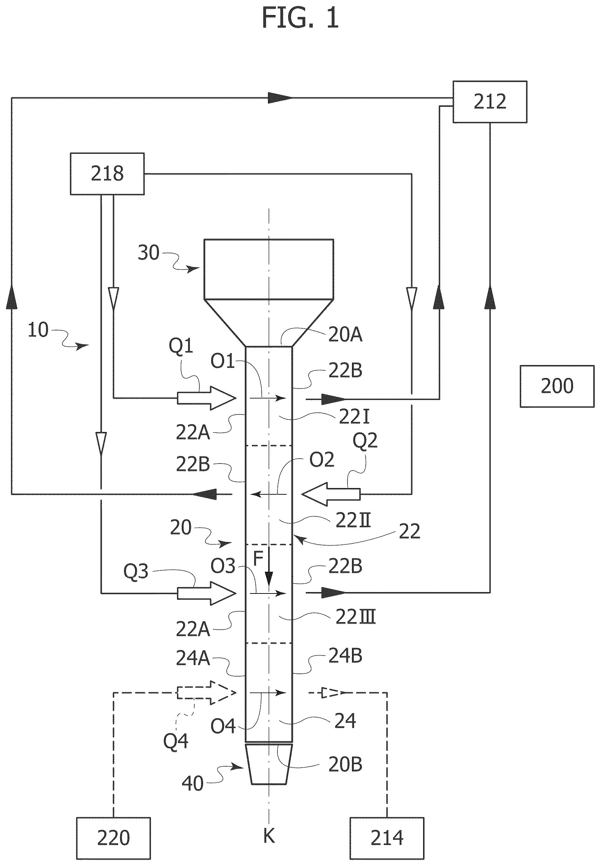

Referring to figure 1, in one or more preferred embodiments, such as the one illustrated, the method described herein provides for the use of a roasting plant 10, comprising:
- a roasting chamber 20, which extends vertically from a first upper end 20A to a second lower end 20B, along a vertical feeding direction K, and
- a feeding system to feed a flow of hazelnuts to be roasted through the roasting chamber 20, along the feeding direction K, from the first upper end 20A to the second lower end 20B.

In particular, the feeding system is configured to generate a flow of hazelnuts F, through the roasting chamber 20, in the form of a granular solids flow having a cross-section corresponding to a flow section of the same roasting chamber 20.

In one or more preferred embodiments, such as the one illustrated, the feeding system includes an upper hopper 30, which is positioned above the first upper end 20A of the roasting chamber 20 and which, through the same first end 20A, is in fluid communication with the interior of the roasting chamber 20.

The hopper 30 is configured to receive the hazelnuts to be roasted and convey them to the roasting chamber 20.

In some applications, the hopper 30 may be connected to a hazelnut feeding circuit arranged to transport the hazelnuts to the hopper 30, for example with the aid of pneumatic means.

In one or more preferred embodiments, such as the one illustrated, the feeding system further includes an outlet unit 40, which is instead positioned below the second lower end 20B of the roasting chamber 20 and which, through such second end 20B, is in fluid communication with the interior of the roasting chamber 20.

The outlet unit 40 is configured to regulate the flow of hazelnuts exiting the roasting chamber 20, consequently determining the flow rate of the hazelnuts F.

The outlet unit 40 can be of any known type capable of performing the indicated function. For example, the outlet unit 40 may include a rotary valve, comprising a rotor, whose rotation speed determines the flow rate of the hazelnuts F; according to a further example, the outlet unit may instead be equipped with an extraction conveyor, whose advancement speed determines the flow rate of the hazelnuts F.

For the implementation of the method described herein, the roasting chamber 20 is completely filled with hazelnuts, from the lower end 20B to the upper end 20A, and the above-described feeding system is activated to generate the flow of hazelnuts F, which moves along the entire roasting chamber 20, from the first upper end 20A to the second lower end 20B, in the feeding direction K.

The flow of hazelnuts F generated is a granular solids flow that assumes the shape imposed by the internal space of the roasting chamber 20 and thus presents a cross-section corresponding to the flow section of the roasting chamber 20.

In one or more preferred embodiments, such as the one illustrated, the roasting chamber 20 has a constant flow section throughout its development along the feeding direction K.

Preferably, the flow section of the roasting chamber 20 is rectangular in shape.

In one or more preferred embodiments, such as the one illustrated, the roasting plant 10 further includes a thermal treatment system to perform a roasting thermal treatment on the flow of hazelnuts F.

In one or more preferred embodiments, such as the one illustrated, the thermal treatment system is configured to transport a heating fluid through a heating section 22 of the roasting chamber 20, in a direction transverse to the feeding direction K, and to transport a cooling fluid through a cooling section 24 of the roasting chamber 20, which is subsequent to the first section 22 (along the feeding direction K), also in a direction transverse to the feeding direction K.

In one or more preferred embodiments, such as the one illustrated, the heating section 22 is divided into subsections 22i arranged in series along the feeding direction K, and the thermal treatment system is configured to transport the heating fluid through the individual subsections, along opposite directions that alternate from one subsection to another.

With particular reference to the example of figure 1, the first section 22 includes three subsections 22I, 22II, 22III; each subsection includes an inlet 22A and an outlet 22B.

The inlet 22A is in fluid communication with the interior of the respective subsection and is configured to introduce the heating fluid inside the same subsection.

The outlet 22B is in fluid communication with the interior of the respective subsection and is configured to allow the heating fluid to exit the same subsection.

In subsection 22I, the inlet 22A is located on the left side of the roasting chamber 20 (referring to figure 1), while the outlet 22B is located on the right side.

In subsection 22II, the arrangement of the respective inlet 22A and outlet 22B is exactly opposite (compared to that provided in subsection 22I), while in subsection 22III the arrangement of the respective inlet 22A and outlet 22B is the same as in subsection 22I.

In the method described herein implemented by the roasting plant 10, the first subsection 22I is traversed by a flow Q1 of the heating fluid directed along the horizontal direction O1, the second subsection 22II is traversed by a flow Q2 of the heating fluid directed along a horizontal direction 02 opposite to direction O1, and finally, the third subsection 22III is traversed by a flow Q3 of the heating fluid directed along a horizontal direction 03 opposite to direction O2 and concurrent with direction 01.

Similarly, the cooling section 24 includes an inlet 24A and an outlet 24B.

The inlet 24A is in fluid communication with the interior of section 24 and is configured to introduce the cooling fluid inside the same section 24.

The outlet 24B is in fluid communication with the interior of section 24 and is configured to allow the cooling fluid to exit the same section 24.

In the method described herein implemented by the roasting plant 10, the cooling section 24 is traversed by a flow Q4 of the cooling fluid directed along a direction 04, which may be either concurrent with directions 01 and 03 or with direction 02 (in the illustrated example, direction 04 is concurrent with directions O1 and 03).

Preferably, directions 01-04 (along which the roasting chamber 20 is traversed by flows Q1-Q4) are transverse to the longer side of the rectangular flow section of the roasting chamber 20.

In one or more preferred embodiments, such as the one illustrated, the thermal treatment system includes at least one suction unit 212 for feeding the heating fluid to the inlets 22A of the heating section 22, and for the subsequent withdrawal of the heating fluid from the outlets 22B of the same section 22.

Furthermore, the thermal treatment system includes a suction unit 214 for feeding the cooling fluid to the inlet 24A of the cooling section 24, and for the subsequent withdrawal of the cooling fluid from the outlet 24B of the same section 24.

The thermal treatment system also includes a heating unit 218 to heat the heating fluid to a predefined temperature before it is transported to the inlets 22A of the heating section 22, and a cooling unit 220 configured to cool the cooling fluid before it is transported to the inlet 24A of the cooling section 24.

The configuration of the thermal treatment system can vary according to the needs of specific applications.

In view of the above, in the method described herein, the flow of hazelnuts F moving along the roasting chamber 20 is first subjected to a heating phase while traversing the heating section 22, and subsequently to a cooling phase while traversing the cooling section 24.

The heating phase is directly responsible for the roasting treatment performed on the hazelnuts.

The method described herein provides for continuously monitoring and controlling the reduction of microbial load achieved in the hazelnuts following the roasting process described above.

The method described herein uses an approach completely different from the measurement of microbial load reduction through laboratory tests performed on a sample of the already treated product, as provided by the prior art.

In fact, the method described herein provides for real-time and continuous control of the microbial load reduction in the hazelnuts, during the roasting process within the roasting plant 10.

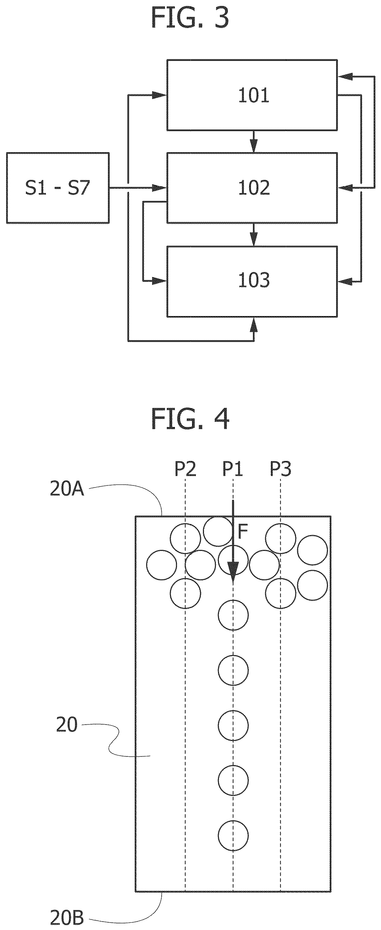

In this regard, it should be noted that the method described herein overcomes the difficulties arising from the fact that the hazelnuts are subjected to the roasting process en masse, in the form of a continuous flow of hazelnuts moving along the roasting chamber 20, through the insight of identifying a control path P1 and monitoring the microbial load reduction with specific reference to this path (Figure 4).

The control path P1 is a flow trajectory followed by a single hazelnut along the roasting chamber 20, due to the movement of the flow of hazelnuts F along the feeding direction K.

Figure 4 exemplarily illustrates the product flow F moving along the roasting chamber 20; in this figure, the flow trajectory identifying the control path P1 is illustrated, as well as two other flow trajectories P2 and P3 followed by the hazelnuts due to the movement of the flow of hazelnuts F along the roasting chamber 20.

The control path P1 is a flow trajectory selected from all those identifiable in the product flow F.

The control path P1 can also be a flow trajectory followed by a subgroup of hazelnuts from the entire mass of hazelnuts introduced into the roasting chamber 20 per unit of time.

As will be seen later, the subgroup of hazelnuts can consist of hazelnuts contained within an elementary block of the flow of hazelnuts F; the elementary block can, for example, be such as to include only hazelnuts - considering the hazelnuts in their entirety - that are aligned along one and the same direction transverse to the feeding direction K.

The elementary block is characterized by having a very small quantity of hazelnuts, if not negligible, compared to the total quantity of hazelnuts in the flow F; in this case, the method provides for monitoring each hazelnut of the subgroup.

Preferably, the method described herein therefore provides for determining:
- a historical series of temperature values indicative of the temperatures that occur at the positions of the control path P1 when the single hazelnut, or the subgroup of hazelnuts, moving along that path, passes by, and
- a historical series of time values indicative of the exposure times of the hazelnut, or the subgroup of hazelnuts, to the aforementioned temperatures, at the different positions of the control path P1.

The method described herein then provides for determining an indicative data of a microbial load reduction in the single hazelnut, or in the subgroup of hazelnuts, at the end of the control path P1, based on the historical series of temperature values and the historical series of time values, previously determined.

Preferably, the control path P1 represents the flow trajectory, among all those traversable by the hazelnuts along the roasting chamber 20, along which the roasting treatment is less effective, that is, along which there are time and temperature conditions more disadvantaged for the reduction of microbial load.

The microbial load reduction determined with reference to such a control path P1 will therefore certainly be the lowest achieved by the roasting process, so that through this determined microbial load reduction, it is possible to verify whether for the entire flow of hazelnuts F the microbial load reduction obtained actually always remains above the predefined lower limit.

The method described herein is thus able to continuously monitor the microbial load reduction of all the treated hazelnuts.

According to the method described herein, if the determined microbial load reduction is higher than the reference threshold, the roasting process continues regularly; if instead the determined microbial load reduction is lower than the reference threshold, a control signal is generated.

The control signal can, for example, be an alarm signal to call for the intervention of an operator.

As will be said later, the control signal can also be a control signal to automatically activate correction operations to remedy the insufficient microbial load reduction obtained in the roasting process.

For example, the control path P1 is identified with a flow trajectory passing through the geometric centers of the flow sections of the roasting chamber 20.

In one or more preferred embodiments, such as the one illustrated, determining the historical series of temperature values and the historical series of time values includes the operation of computing, moment by moment, the temperatures that occur along the control path P1 and the exposure times of the hazelnuts moving along the control path P1, at such temperatures.

Preferably, such computing operation is performed based on the following operational parameters of the method described herein, or of a related subgroup: the flow rate of the hazelnut flow F, the speed and temperature of at least one flow of the heating fluid in a position upstream and/or downstream of the roasting chamber, the speed and temperature of at least one flow of the cooling fluid in a position upstream and/or downstream of the roasting chamber 20, and the temperature, size, and humidity of the hazelnuts loaded into the upper hopper 30.

Indicative data of the aforementioned parameters can be obtained from detections made through specific sensors.

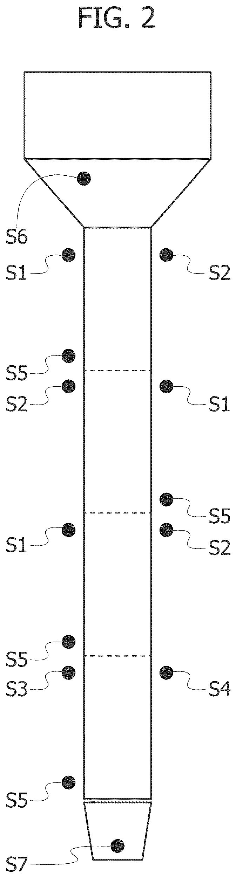

With specific reference to the illustrated example (see figure 2), the roasting plant 10 includes temperature sensors S1 to detect the temperature of the Q1-Q3 flows of the heating fluid in positions upstream of the inlets 22A of the heating section 22, temperature sensors S2 to detect the temperature of the Q1-Q3 flows of the heating fluid in positions downstream of the outlets 22B of the heating section 22, a sensor S3 to detect the temperature of the Q4 flow of the cooling fluid in a position upstream of the inlet 24A of the cooling section 24, a temperature sensor S4 to detect the temperature of the Q4 flow of the cooling fluid in a position downstream of the outlet 24B of the cooling section 24, sensors S5 to detect the speed of the Q1-Q4 flows of the heating and cooling fluids, a sensor S6 to detect the temperature of the hazelnuts loaded into the upper hopper 30, and a sensor S7 to detect the rotation speed of the rotor of the rotary valve 40.

Preferably, the aforementioned computing operation also involves the use of simulation software configured to create mathematical models of the kinematics of the hazelnut flow F moving along the roasting chamber 20, and of the thermodynamic conditions that occur inside the roasting chamber 20 as a result of the passage of the heating fluid and the cooling fluid.

In this regard, commercially available simulation software can be used.

Through the simulation software in question, the method described herein provides for deriving, moment by moment, and for all positions of the control path P1, calculated temperature values, indicative of the temperature at each position, and calculated time values, indicative of the occupation time of each position by the hazelnut or subgroup of hazelnuts.

Based on these calculated values, it is therefore possible to determine the microbial load reduction to which the single hazelnut or the subgroup of hazelnuts is subjected, while it moves along the control path P1.

In this regard, the scientific literature offers a series of empirical formulas that correlate the microbial load reduction in a food to an exposure time of the food to a certain treatment temperature. One of these formulas is reported below: $F / D = Log Reductions$ where:
F is the actual treatment time.
D is the decimal reduction time, that is, the time required to reduce the microbial population by a factor of 10 (reduction of 1 log).

Temperature intervenes through the value z, which represents the temperature change needed to modify the value of D by a factor of 10. The decimal reduction time at a certain temperature T is defined by the relationship: ${D}_{T} = {D}_{ref} ⋅ {10}^{\frac{{T}_{ref} - T}{z}}$ where:
D_{ref} is the decimal reduction time at a reference temperature T_{ref}
z determines the sensitivity of the microbial population to temperature.

In summary, the logarithmic reduction directly depends on the ratio between the treatment time and the decimal reduction time, which in turn is influenced by temperature according to an exponential model regulated by the value z. At higher temperatures, the value of D_{T} decreases, accelerating microbial inactivation and increasing the log reduction per unit of time.

The method described herein can therefore use one of the formulas already known in the art for computing the microbial load reduction, in order to determine the microbial load reduction obtained in the hazelnuts at each of the positions of the control path P1, employing the aforementioned calculated values of temperature and time.

The sum of the values thus obtained for all positions of the control path P1 corresponds to the overall microbial load reduction that the roasting process has allowed to achieve at the end of the control path P1.

Figure 3 represents an example of a control logic that can be implemented in the method described herein for determining the reduction of the microbial load.

In this example, the use of two separate simulation models that exchange data with each other and use the data obtained through the sensors S1-S7 described above is envisaged.

In any case, the number of simulation models used can be any, greater than or equal to one.

The described example proves advantageous in terms of operational efficiency, while also allowing a significant reduction in the time and costs associated with the required computational operations

Referring to figure 3, the method described herein provides for a phase 101 in which a first simulation model representative of the kinematics of the entire flow of hazelnuts F moving along the sections and subsections of the roasting chamber 20 is processed, moment by moment; for the sake of simplifying the model, the hazelnuts can be approximated as spherical geometric bodies of uniform size.

This first model uses as input data at least the data detected through sensor S7 and calculates the path of the hazelnuts over time, as well as the saturation conditions of the various sections and subsections by the product.

The saturation conditions can be expressed as: $Void = \frac{{V}_{TOT} - {V}_{PART}}{{V}_{TOT}}$ where V_{TOT} is a given available volume of the roasting chamber, and V_{PART} is the volume actually occupied by the hazelnuts present within the given available volume.

The entire volume of the roasting chamber can be discretized in order to calculate the trend of the *Void* along the entire development of the roasting chamber.

In an example of application, the first simulation model can be configured to simulate the flow of hazelnuts F as a laminar fluid flow, that is, characterized by layers of fluid that flow parallel without mixing turbulently. The first model can, for example, be based on the Navier-Stokes equations for the motion of viscous fluids.

The method then provides for a second phase 102, in which a second simulation model representative of the thermodynamic conditions inside the roasting chamber 20 is processed.

In particular, this second model simulates the thermodynamic behaviour of the physical system defined by the roasting chamber 20, the Q1-Q4 flows, and the hazelnut flow F; for this purpose, the model in question takes into account the thermodynamic phenomena that occur in such a physical system, such as the heat exchange between the hazelnuts and the Q1-Q4 flows through convection, conduction, and radiation mechanisms, and the evaporation of water contained in the hazelnuts, to name a few.

The second model in question uses as input data the data detected through sensors S1-S6 and the data calculated by the first model, and calculates the temperature values for the positions Pi of the control path P1.

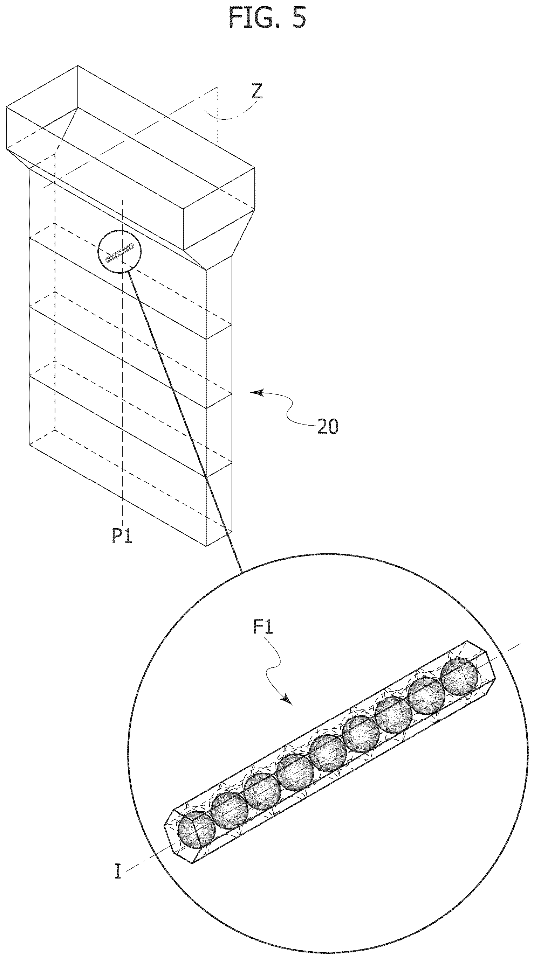

In the illustrated example (see figure 5), the control path P1 is defined as the set of positions taken by an elementary block F1 that constitutes part of the hazelnut flow F and that, together with the remaining part of the hazelnut flow, moves through the roasting chamber 20, along the feeding direction K, from the upper end 20A to the lower end 20B; the elementary block F1 includes a regular alternation of hazelnuts in contact with each other and empty spaces present between the hazelnuts.

Preferably, the elementary block F1 corresponds to a parallelepiped that extends longitudinally along a horizontal direction parallel to directions 01, 02, and 03 and for the entire width of the flow F along the same direction (that is, for the entire width of the internal volume of the roasting chamber 20); the parallelepiped in question also includes two opposite faces, orthogonal to directions 01, 02, and 03, and having a limited area capable of containing within it the complete projection, on the same area, of a single granular body of the product.

Preferably, the elementary block F1 has opposite vertical faces of hexagonal shape.

Preferably, the elementary block F1 contains a single row of granular product bodies arranged along the central axis I of the same elementary block.

Preferably, the control path P1 is contained within a vertical plane Z that passes through the geometric centers of the flow sections defined by the roasting chamber 20 along the feeding direction K, and which is parallel to the directions of flows Q1-Q4 (see figure 5).

Preferably, the second simulation model is configured to simulate the thermodynamic behaviour of the aforementioned physical system defined by the roasting chamber 20, the Q1-Q4 flows, and the hazelnut flow F, limited to the series of elementary blocks F1 that can be identified along the control path P1.

This series consists of elementary blocks F1 that are mutually superimposed in plane Z and follow one another along the control path P1.

The second simulation model in question determines, moment by moment, and for each elementary block F1, the temperatures to which the individual granular product bodies that are part of the same elementary block are subjected.

To calculate these temperature values, the second simulation model updates, moment by moment, the position of the single elementary block F1 along the control path P1 and the Void saturation condition (which are data obtained from the first simulation model), and the boundary thermodynamic conditions that the elementary block F1 encounters in each new position (which are data obtained through sensors S1-S6).

By following each elementary block F1 along the entire control path P1, the second simulation model is thus able to provide a historical series of temperature values indicative of the temperatures to which the individual hazelnuts of the elementary block have been subjected during the passage through the roasting chamber 20, and a historical series of time values indicative of the exposure times of the hazelnuts to such temperatures.

As schematically represented in figure 3, each of the two phases 101 and 102 can iteratively use the set of data obtained through sensors S1-S7 and the data calculated in the same phases 101, 102.

The method described herein finally provides for a phase 103 in which the microbial load reduction achieved in the hazelnuts of the elementary block F1 is calculated based on the respective historical series of temperature values (indicative of the temperatures to which the hazelnuts have been subjected along the control path P1) and based on the respective historical series of time values (indicative of the exposure times of the hazelnuts to such temperatures).

The determination of microbial load reduction according to phase 103 can be performed only for the elementary blocks F1 that have already completed the control path P1, or also for those that are in an intermediate position of the control path P1.

In this second case, the microbial load reduction that has been reached at an intermediate stage (or a series of intermediate stages) of the roasting process is thus calculated, with the advantage of being able to immediately implement compensation procedures when the calculated microbial load reduction is lower than a reference value, in order to still achieve the predetermined bacterial load reduction at the end of the roasting process.

The control path P1 can be identified in a set-up phase of the roasting plant, experimentally or with the aid of simulation software capable of calculating, for each position of the roasting chamber 20, temperature and exposure time of the product to the same temperature; the control path P1 can, for example, be identified with the flow trajectory associated with estimated temperature values and estimated time values from which the lowest amount of heat exchanged between the product bodies and the surrounding environment is derived, compared with all the other flow trajectories.

As already indicated above, once the overall microbial load reduction is calculated, the method described herein provides for comparing the calculated value with a reference value and generating a control signal if the calculated value is lower than the reference value.

The control signal can be an alarm signal.

In view of the above, the method described herein is thus able to continuously monitor the microbial load reduction in the treated hazelnuts, thereby allowing an operator to promptly intervene in cases where an insufficient microbial load reduction is detected.

As anticipated above, the method described herein may also provide for implementation variants in which correction procedures are automatically activated to remedy the detected insufficient microbial load reduction.

For example, the method may provide for the generation of a control signal to control the thermal treatment system in order to increase the temperature and/or the flow rate of the Q1-Q3 flows fed to the inlets 22A of the roasting chamber 20, and/or a control signal to control the outlet unit 40 to reduce the flow rate of the hazelnut flow F.

The aforementioned control signal can control the thermal treatment system and/or the valve unit based on a difference between the calculated microbial load reduction and the reference value.

The method described herein may also provide for implementation variants in which correction procedures are activated to prevent the achievement of an insufficient microbial load reduction.

In particular, the method described herein can associate a second reference value with an intermediate position of the control path P1, for example at the first and/or second subsection 22I, 22II, and, if the overall microbial load reduction value calculated up to such intermediate position is lower than the said second reference value, the method can automatically activate the above-mentioned adjustments (for example, increasing the temperature and/or the flow rate of the Q3 flow of the heating fluid) in order to intensify the roasting process in the stretch of the control path P1 downstream of the said intermediate position, in order to accelerate the microbial load reduction process and thus achieve an overall microbial load reduction higher than the first reference value, at the end of the control path P1.

To realize the method described herein, the roasting plant 10 includes a control unit 200 specifically configured for its implementation.

Of course, while the principle of the invention remains the same, the details of realization and the forms of implementation can vary, even significantly, with respect to what is illustrated here purely by way of non-limiting example, without thereby departing from the scope of the invention, as defined by the attached claims.

## Claims

1. Method for the industrial roasting of a food product, in particular nuts, comprising the steps of:
- providing a roasting chamber (20) that extends from a first to a second end (20A, 20B) along a feeding direction (K);
- feeding a flow (F) of product to be roasted through said roasting chamber (20), along said feeding direction (K), from the first to the second end (20A, 20B) of said roasting chamber, in the form of a flow of granular product bodies having a cross-section corresponding to a flow section of said roasting chamber (20) ;
- while said product flow (F) is fed along said roasting chamber, subjecting said product flow to a roasting thermal treatment;
- identifying a control path (P1) through said roasting chamber (20), along said feeding direction (K), from the first end (20A) to the second end (20B), where said control path (P1) is defined by a set of positions occupied by a single product body, or by a subgroup (F1) of product bodies, in their respective movement through said roasting chamber (20), from the first end (20A) to the second end (20B);
- determining a historical series of temperature values indicative of the temperatures that occur along said control path (P1), during the movement of said product body, or of said subgroup of product bodies, along said control path (P1), from said first end (20A) to said second end (20B), and determining a historical series of time values indicative of an exposure time of said product body, or of said subgroup of product bodies, to said temperatures, during the movement of said product body, or of said subgroup (F1) of product bodies, along said control path (P1);
- determining at least one indicative data of a microbial load reduction based on said historical series of temperature values and said historical series of time values, and generating at least one control signal if the determined data is lower than a reference value.

2. Method according to claim 1, wherein subjecting said product flow to a roasting thermal treatment includes providing at least one inlet (22A) and at least one outlet (22B) in fluid communication with said roasting chamber (20), and introducing at least one flow (Q1-Q3) of a thermal treatment fluid into said roasting chamber (20), through said inlet (22A), and extracting from said roasting chamber (20) said at least one flow (Q1-Q3) of a thermal treatment fluid, through said at least one outlet (22B),
said at least one flow (Q1-Q3) of a thermal treatment fluid crossing said product flow (F) in said roasting chamber, along a direction (01-03) transverse to said feeding direction (K).

3. Method according to claim 1 or 2, wherein said feeding direction (K) is vertical and downward,
the method further comprising:
- providing a first inlet (22A) and a first outlet (22B) in fluid communication with a first subsection (22I) of a heating section (22) of said roasting chamber (20), and introducing a first flow (Q1) of a heating fluid into said first section (22I) of said roasting chamber, through said first inlet (22A), and extracting from said first subsection (22I) said first flow (Q1) of a heating fluid, through said first outlet (22B),
said first flow (Q1) of a heating fluid crossing said product flow (F) in said first subsection (221), along a first horizontal direction (01);
- providing a second inlet (22A) and a second outlet (22B) in fluid communication with a second subsection (22II) of said heating section (22), which is disposed downstream of said first section (22I), with reference to said feeding direction (K), and introducing a second flow (Q2) of a heating fluid into said second subsection (22II), through said second inlet (22A), and extracting from said second subsection (22II) said second flow (Q2) of a heating fluid, through said second outlet (22B),
said second flow (Q2) of a heating fluid crossing said product flow (F) in said second subsection (22II), along a second horizontal direction (02) different from, preferably opposite to, said first horizontal direction (O1).

4. Method according to claim 3, further comprising:
- providing a third inlet (24A) and a third outlet (24B) in fluid communication with a cooling section (24) of said roasting chamber (20), which is disposed downstream of said heating section (24), with reference to said feeding direction (K), and introducing a third flow (Q4) of a cooling fluid into said cooling section (24), through said third inlet (24A), and extracting from said cooling section (24) said third flow (Q4) of a cooling fluid, through said third outlet (24B),
said third flow (Q4) of a cooling fluid crossing said product flow (F) in said cooling section (24), along a third horizontal direction (O4).

5. Method according to any one of claims 2 to 4,
wherein determining said historical series of temperature values and said historical series of time values includes determining, moment by moment, the temperatures that occur along said control path (P1) and the exposure times of the individual product bodies moving along said control path (P1) to said temperatures, based on a set of data obtained through detections made via sensors, and comprising: the flow rate of the product flow (F), the flow rate of the flow (Q1-Q3) of the thermal treatment fluid, the temperature of the flow (Q1-Q3) of the thermal treatment fluid at said at least one inlet (22A), the temperature of the flow (Q1-Q3) of the thermal treatment fluid at said at least one outlet (22B), and the temperature and humidity of the product before passing through the roasting chamber (20).

6. Method according to claim 5, wherein said determining operation includes
- processing a first mathematical model (101) representative of the kinematics of the product flow (F) through said roasting chamber (20) to obtain a correlation between a plurality of positions of said control path (P1) and a first set of values indicative of occupation times of such positions by said product body or said subgroup (F1) of product bodies;
- processing a second mathematical model (102) representative of the thermodynamic conditions in said roasting chamber (20) to obtain a correlation between the plurality of positions of said control path (P1) and a second set of values indicative of temperatures that occur at such positions.

7. Method according to claim 6, wherein said processing operations are performed moment by moment in order to determine said historical series of temperature values and said historical series of time values.

8. Method according to any one of the preceding claims, wherein said control path (P1) is defined by a set of positions occupied by a subgroup of product bodies consisting of an elementary block (F1) extending longitudinally along a direction transverse to the feeding direction (K), and preferably parallel to the direction of said at least one flow (Q1-Q3) of a thermal treatment fluid, and for the entire width of the product flow (F) along the same direction, and wherein said control path (P1) is contained in a vertical plane (Z) passing through the geometric centers of the flow sections defined internally by said roasting chamber (20) .

9. Method according to any one of the preceding claims, wherein said at least one control signal includes an alarm signal to call for the intervention of an operator.

10. Method according to any one of the preceding claims, wherein said at least one control signal includes a control signal of an outlet unit to vary, preferably decrease, the flow rate of the product flow (F), and/or a control signal of a thermal treatment system to vary, preferably increase, the flow rate and/or the temperature of a flow (Q1-Q3) of a thermal treatment fluid, depending on a difference between said determined data and said reference value.

11. Industrial plant for the roasting of a food product, in particular nuts, comprising:
- a roasting chamber (20) extending from a first to a second end (20A, 20B) along a feeding direction (K);
- a feeding system configured to feed a flow (F) of product to be roasted through said roasting chamber (20), along said feeding direction (K), from the first to the second end (20A, 20B) of said roasting chamber, in the form of a flow of granular product bodies having a cross-section corresponding to a flow section of said roasting chamber (20);
- a thermal treatment system to subject said product flow (F) to a roasting thermal treatment, while said product flow (F) is fed through said roasting chamber (20) ;
- a control unit configured to implement a method according to any one of the preceding claims.

12. Plant according to claim 11, wherein said thermal treatment system includes at least one inlet (22A) and at least one outlet (22B) in fluid communication with said roasting chamber (20), and at least one pressure generating unit configured to introduce at least one flow (Q1-Q3) of a thermal treatment fluid into said roasting chamber (20), through said inlet (22A), and to withdraw said flow (Q1-Q3) of a thermal treatment fluid from said roasting chamber (20), through said outlet (22B), said flow (Q1-Q3) of a thermal treatment fluid crossing said product flow (F) in said roasting chamber (20), along a direction (01-03) transverse to said feeding direction (K).
